# EUROPÄISCHE PATENTSCHRIFT

(11) **EP 0 638 128 B1**
(45) Veröffentlichungstag und Bekanntmachung des Hinweises auf die Patenterteilung: **11.09.1996**
(21) Anmeldenummer: 93911776.8
(22) Anmeldetag: 23.04.1993
(51) Int. Cl.: C14C 9/02, C08G 77/38

(54) **VERFAHREN ZUR HYDROPHOBIERUNG VON MATERIALIEN FASERIGER STRUKTUR UND MITTEL ZUR DURCHFÜHRUNG DES VERFAHRENS**
PROCESS AND AGENTS FOR WATERPROOFING MATERIALS HAVING A FIBROUS STRUCTURE
PROCEDE ET DISPOSITIF D'IMPERMEABILISATION DE MATERIAUX A STRUCTURE FIBREUSE

(30) Priorität: 29.04.1992 DE 4214150
(43) Veröffentlichungstag der Anmeldung: 15.02.1995
(73) Patentinhaber: Chemische Fabrik Stockhausen GmbH, D-47805 Krefeld (DE)
(72) Erfinder: LOHMANN, Helmut, D-4150 Krefeld (DE); KAUSSEN, Manfred, D-5100 Aachen (DE); STRIJBOS, Leonardus, D-4154 Tönisvorst (DE); INGER, Waldemar, D-4150 Krefeld 11 (DE)
(74) Vertreter: Klöpsch, Gerald, Dr.-Ing. Patentanwalt
(86) Internationale Anmeldenummer: EP9300983
(87) Internationale Veröffentlichungsnummer: WO9322464

(56) Entgegenhaltungen:
- EP-A- 0 249 908
- EP-A- 0 283 156
- EP-A- 0 324 345
- EP-A- 0 431 609
- DE-A- 3 317 422
- DE-A- 3 419 405
- FR-A- 1 559 985

## Beschreibung

Die Erfindung betrifft die Hydrophobierung von Materialien faseriger Struktur, insbesondere von Leder, Pelzfellen, Lederaustauschstoffen unter Verwendung von Sulfobernsteinsäureester enthaltenden Hydrophobiermitteln und Hydrophobiermittel zur Durchführung des Verfahrens. Sulfobernsteinsäureester finden auf Grund ihres milden Tensidcharakters (gute dermatologische Verträglichkeit) zunehmende Verbreitung in Shampoos, Schaumbädern und Kosmetika (personal care products), wo normalerweise ihre gute Emulgierwirkung, hohes Schaumvermögen und gute Wasch-, d. h. Netzmittelwirkung, gezielt genutzt wird.

Die Verwendung von Sulfosuccinaten im Rahmen der Lederherstellung wird in der DE-OS 16 69 347 und der DE-OS 34 19 405 beschrieben, wo ihr Einsatz als Fettungsmittel in der Hauptfettung bzw. in der Gerbung und Nachgerbung beansprucht wird.

Die Emulgatoreigenschaften von Sulfobernsteinsäuremonoestern werden in der DE-OS 35 07 241 dazu genutzt, in Kombination mit imprägnierenden und/oder hydrophobierenden Fettungsmitteln wasserabweisende Eigenschaften des behandelten Leders zu erzielen, wobei eine anschließende Fixierung mit Chrom- und/oder Aluminiumsalzen durchgeführt wird und dadurch eine Umwandlung des hydrophilen W/O-Emulgators in hydrophobierende Metallkomplexsalze erfolgt. Die Mitverwendung von Sulfobernsteinsäuremonoestern bei der imprägnierenden und/oder hydrophobierenden Fettung dient einer bewußten Erhöhung der Stabilität der Lickeremulsion. Emulgiert bzw. stabilisiert werden können neben den imprägnierenden Fettungsmitteln aus der Gruppe oxidierter oder oxidierter und teilsulfierter C₁₈₋₂₆-Kohlenwasserstoffe oder C₃₂₋₄₀-Wachse, Phosphorsäuremono-C₁₂₋₂₄-alkylester, Partialester von Polycarbonsäuren wie Citronensäure--C₁₆₋₂₄-alkylester, Partialester von Polyalkoholen wie Sorbitan- und Pentaerythrit-C₁₆₋₂₄-fettsäureester sowohl unbehandelte Öle (Neutralöle) wie langkettige Kohlenwasserstoffe, Chlorparaffin, tierische und vegetabile Öle und Fette bzw. deren Methylester und chlorierte Fettsäuremethylester, als auch sulfatierte, sulfitierte und/oder synthetische Fettungsmittel auf Basis von Chlorparaffinsulfonaten.

Eine Verbesserung der Hydrophobierwirkung gegenüber dem zuletzt beschriebenen Verfahren erzielt man im wesentlichen durch Substitution der Sulfobernsteinsäuremonoester gegen Sulfobernsteinsäuremonoamide. Nachteil ist jedoch auch bei diesem in der DE-OS 36 20 780 beschriebenen Verfahren, daß eine nachträgliche Fixierung mit Chrom-, Aluminium-, Titan- und/oder Zirkonsalzen obligatorisch ist. Diese Fixierung erfolgt in der Praxis überwiegend durch Einsatz von Chromsalzen.

Aus der EP 02 13 480 ist bekannt, daß die Hydrophobierung von Ledern und Pelzen mit einem Silikonöl und dem Salz einer N-(C₉-C₂₀-Acyl)aminosäure als Emulgator erfolgt, wobei gegebenenfalls mit einem in der Gerberei üblichen Metallsalz nachbehandelt werden kann. Es hat sich jedoch gezeigt, daß der Verzicht auf die Metallsalzfixierung nur zu unzureichenden Hydrophobierergebnissen führt.

In vielen Ländern verschärfen sich jedoch die Auflagen bezüglich des Chromgehaltes im Abwasser. Bekanntlich wird bei Verwendung konventioneller Chromgerbstoffe ein nicht unerheblicher Teil von der Lederfaser nicht gebunden und gelangt deshalb über Wasch- und Spülvorgänge ins Abwasser. Bei Einsatz hochauszehrender Chromgerbstoffe ist dieser Anteil zwar geringer, liegt jedoch in der Praxis ebenfalls oberhalb der geforderten sehr niedrigen Werte.

Weiterhin ist in der EP 03 24 345 ein Verfahren zum Hydrophobieren von Leder, Pelzen und Lederaustauschstoffen mit einem carboxylgruppenhaltigen Polysiloxan beschrieben, dessen Carboxylgruppen in neutralisierter Form vorliegen. Das dort beschriebene Verfahren arbeitet in Abwesenheit von Emulgatoren und ohne Nachbehandlung mit mineralischen Gerbstoffen.

Aus der 04 31 609 A2 sind Sulfosuccinatgruppen enthaltende Organopolysiloxane bekannt, die dadurch erhalten werden, daß zunächst in einer ersten Stufe ein Dihydroxyalkin mit einem Organopolysiloxan zu einem Organopolysiloxan umgesetzt wird, welches entweder an beiden Enden des Moleküls je eine Dihydroxyalkenylgruppe oder an einem Ende zwei Dihydroxyalkenylgruppen enthält, worauf dann in einer zweiten Stufe diese Organopolysiloxane mit Maleinsäure umgesetzt werden und schließlich die Maleinatgruppen des in der zweiten Stufe erhaltenen Organopolysiloxans mit Alkalihydrogensulfit oder Ammoniumhydrogensulfit in Gegenwart von Wasser und einer basischen Verbindung umgesetzt werden. Die so erhaltenen Reaktionsprodukte weisen eine olefinische Doppelbindung auf, die auch bei der Umsetzung mit Maleinsäureanhydrid erhalten bleibt. Die durch Umsetzung mit Maleinsäureanhydrid und abschließend durch Sulfitierung erhaltenen Sulfosuccinatgruppen enthaltenden Organopolysiloxane, weisen ausgeprägte oberflächenaktive Eigenschaften auf und sollen in wäßrigen Systemen als Emulgatoren oder Schaummittel verwendet werden.

Aufgabe der Erfindung war es daher, Substanzen und Verfahrensweisen bereitzustellen, die aus wäßriger Flotte appliziert hydrophobierte Leder ergeben, ohne eine nachträgliche Behandlung mit Mineralsalzen durchführen zu müssen, um die genannte Abwasserkontamination zu vermeiden.

Gelöst wurde die Aufgabe durch Behandlung chromgegerbter, neutralisierter und gewaschener Leder mit Sulfobernsteinsäuremonoester und/oder Organosilikonmonosulfosuccinat enthaltenden Hydrophobierungsmitteln. Dabei wurde überraschenderweise festgestellt, daß nach dem Absäuern auf eine zusätzliche, bisher übliche Metallsalzfixierung verzichtet werden kann.

Gegenstand der Erfindung ist daher ein Verfahren zur Hydrophobierung von Materialien faseriger Struktur, insbesondere von Leder, Pelzen und Lederaustauschstoffen unter Verwendung von Sulfobernsteinsäuremonoestern enthaltenden Hydrophobiermitteln in wäßriger Flotte ohne Mineralsalzfixierung. Werden als Sulfobernsteinsäuremonoester Organosilikondi-(monosulfosuccinate) eingesetzt, so können sie allein zur Hydrophobierung verwendet werden. Andere Sulfosuccinate als die Organosilikondi-Derivate werden mit Mineralöl, Paraffin, Chlorparaffin und Silikonöl sowie deren Mischungen kombiniert und kommen als Hydrophobiermittel in dieser Form zur Anwendung. Aber auch die Organosilikondi-(monosulfosuccinate) können nicht nur allein sondern auch in Mischung mit anderen Sulfobernsteinsäuremonoestern und/oder anderen hydrophobierend wirkende Substanzen kombiniert werden. Diese Hydrophobiermittel können sowohl in einer einstufigen Arbeitsweise anstelle der Hauptfettung als auch im Sinne einer mehrstufigen Arbeitsweise in der Vorfettung, der Hauptfettung und gegebenenfalls in der Top-Fettung eingesetzt werden.

Gegenstand der Erfindung sind ferner neue Sulfobernsteinsäuremonoester, erhältlich durch Umsetzung von α,ω-organofunktionellen Polysiloxanen der Formel 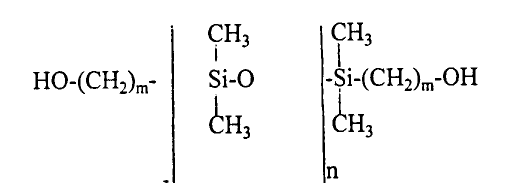 worin n eine Zahl von 10 bis 30 beträgt und m für 1 - 4 steht, mit Maleinsäureanhydrid und nachfolgender Sulfitierung.

Die Herstellung der Sulfobernsteinsäuremonoester-Salze erfolgt durch Veresterung von Maleinsäureanhydrid mit 1 bis 2 Äquivalenten an Veresterungskomponente. Dieser Schritt wird bevorzugt in der Weise durchgeführt, daß bereits während der Veresterung Neutralöle zugegen sind. Anschließend erfolgt die Umsetzung des Halbesters mit auf Maleinsäureanhydrid bezogen, 0,5 - 1,5 Äquivalenten eines Sulfits oder Bisulfits. Zur Veresterung eignen sich prinzipiell alle ein- oder mehrwertigen alkoholischen Komponenten mit einem oder mehreren Alkylresten der Kettenlänge C₁₂ bis C₄₀, vorzugsweise C₁₆ bis C₂₈ sowie Wollwachsalkohole. Diese können gesättigt oder ungesättigt, geradkettig oder verzweigt sein. Ebenso können alkoxylierte Fettalkohole mit Ethylenoxid- und/oder Propylenoxid-Anteilen von 1 - 10 Mol, vorzugsweise 2 - 5 Mol, pro Mol Fettalkohol und Fettsäuremono- und -diglyceride, deren Alkoxylierungsprodukte, Fettsäurepolyglykolester, mit Ethylen- und/oder Propylenoxid-Anteilen wie zuvor sowie Pentaerythrit- und Sorbitanfettsäureester verwendet werden. Polyole werden in solchen stöchiometrischen Verhältnissen mit Maleinsäureanhydrid umgesetzt, daß pro Mol Maleinsäureanhydrid nur eine Carboxylgruppe die Esterbindung eingeht.

Als Polyole können auch reaktiven Siloxane, z. B. α, ω-organofunktionelle Polysiloxane vom Typ 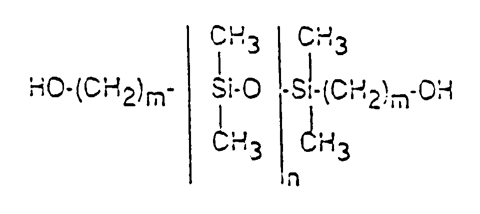 eingesetzt werden.

Die Zahl der wiederkehrenden Einheiten n beträgt ca. 10 bis ca. 30.und m steht für 1 - 4.

Als Neutralöle werden bevorzugt Mineralöle, Paraffine, Chlorparaffine und Silikonöle sowie deren Mischungen verwendet, aber auch tierische und/oder pflanzliche Öle und Fette wie Klauenöl, Fischöl, Talg, Palmöl u. ä..

Durch die Emulgierung der Neutralöle mit den beanspruchten Sulfosuccinaten bzw. deren Salzen wird ein synergistischer Effekt hinsichtlich der wasserabweisenden Ausrüstung erzielt. Optimale Wirkung wird bei einem Neutralölgehalt von ca. 25 - 30 % bezogen auf das Gesamtprodukt erreicht. Bei Verwendung von Mineralölen wirken paraffinbasische tendenziell besser als naphthenbasische.

Die zusätzliche Verwendung von Silikonölen, beispielsweise Dimethyl-, Diphenyl-polysiloxan unterstützt die wasserabweisenden Eigenschaften des Leders. Sie ist auch aus grifflichen Gründen interessant.

Zur Erzielung einer ausreichenden Emulsions- und Lagerstabilität können bei der Sulfitierung gegebenenfalls hydrophobe Emulgatoren eingesetzt werden.

Zur Neutralisation eignen sich grundsätzlich Alkalihydroxide, Ammoniak oder Alkanolamine.

Die Erfindung wird durch die nachfolgenden Beispiele erläutert, dabei gelten die üblichen Bezeichnungen von
- sz =: Säurezahl
- OHZ =: Hydroxylzahl.

Alle Prozentangaben bedeuten Gewichtsprozent.

### Beispiel 1

In einem beheizbaren 1,5 l-Dreihalskolben, versehen mit Rührer, Thermometer und Tropftrichter, wurden 127,29 g (0,338 Mol) eines technischen Gemisches langkettiger Fettalkohole C₁₈-C₂₆ (OHZ: 149) vorgelegt und bei ca. 60° C geschmolzen. Nach vollständiger Schmelze wurden 310 g paraffinisches Mineralöl und 39,4 g Polydimethylsiloxan (Viskosität: 350 m Pa·s) zugegeben und homogenisiert. Danach erfolgte die Zugabe der äquivalenten Menge (33,15 g = 0,338 Mol) Maleinsäureanhydrid. Das Gemisch wurde in der ersten Stunde auf 75° C, anschließend bei 85 - 90° C eine weitere Stunde gerührt.
Die Umsetzung zum Halbester wird durch die Bestimmung der Säurezahl (SZ: 0,65 - 0,68 mmol/g) kontrolliert.
Die anschließende Sulfitierung wurde bei 85 - 95° C mit einer 25%igen Sulfit-Lösung durchgeführt (48,29 g Natriumdisulfit, 0,254 Mol, entsprechend 150 % d. Th., in 144,9 g Wasser). Die Zugabe erfolgt so, daß die Temperatur 80° C nicht unterschreitet. Die gesamte Sulfitierung ist nach 3 - 4 Stunden beendet.
Durch die Zugabe von 50%iger Natronlauge und 60° C warmem gereinigtem Wasser wird das Produkt auf einen pH-Wert von 6,5 - 7,5 und einen Wassergehalt von ca. 42 % eingestellt.

### Beispiel 2

Analog Beispiel 1 wurden 101,68 g (0,27 Mol) des Fettalkoholgemisches in 247,7 g paraffinischem Mineralöl und 31,2 g Polydimethylsiloxan (Viskosität: 350 mPa·s) mit 26,49 g (0,27 Mol) Maleinsäureanhydrid umgesetzt.
Vor der Sulfitierung wurden 23,0 g Sulfobernsteinsäuremonoester auf Basis des in Beispiel 1 verwendeten, mit durchschnittlich 3 Mol Ethylenoxid umgesetzten Fettalkohols, in Form einer 50%igen wäßrigen Einstellung zugegeben. Die anschließende Umsetzung zum Sulfobernsteinsäureester mit einer 25%igen Sulfitlösung (23,1 g Natriumdisulfit, 0,12 Mol, entsprechend 90 % d. Th., in 69,3 g Wasser) erfolgte wie in Beispiel 1.
Durch die Zugabe von Monoethanolamin und 60° C warmem gereinigtem Wasser wird das Produkt auf einen pH-Wert von 6,5 - 7,5 und auf einen Wassergehalt von etwa 50 % eingestellt.

### Beispiel 3

Analog Beispiel 1 wurden 124,28 g (0,33 Mol) eines Fettalkoholgemisches in 255,15 g paraffinischem Mineralöl mit 32,37 g (0,33 Mol) Maleinsäureanhydrid umgesetzt.
Vor der Sulfitierung wurden 51,0 g eines Fettalkoholes C₁₂-C₁₈ zugegeben. Die Sulfitierung wurde unter äußeren Bedingungen wie in Beispiel 1, jedoch mit einer mit Ammoniakwasser auf pH 7 eingestellten 25%igen Sulfit-Lösung (31,37 g Natriumdisulfit, 0,165 Mol, 100 % d. Th., in 94,1 g Wasser) durchgeführt.
Durch Zugabe von 60° C warmem gereinigtem Wasser wird das Produkt auf einen Wassergehalt von ca. 50 % eingestellt.

### Beispiel 4

Analog Beispiel 1 wurden 127,29 g (0,338 Mol) des Fettalkoholgemisches in 320 g paraffinischem Mineralöl und 39,4 g Polydimethylsiloxan (Viskosität: 350 mPa·s) mit 33,15 g (0,338 Mol) Maleinsäureanhydrid umgesetzt.
Anschließend wurden als Coemulgator 10 g des Reaktionsproduktes aus Oleylamin und Acrylsäure sowie Maleinsäureanhydrid gemäß DP-Anmeldung 36 36 497, neutralisiert mit Natronlauge, in Form einer 25%igen wäßrigen Emulsion zugegeben und analog Beispiel 1 mit einer 25%igen Sulfit-Lösung (48,29 g Natriumdisulfit, 0,254 Mol, 150 % d. Th., in 144,9 g Wasser) sulfitiert.
Durch die Zugabe von Natronlauge und Wasser wird das Produkt auf einen pH-Wert von 6,5 - 7,5 und einen Wassergehalt von ca. 39 % eingestellt.

### Beispiel 5

Analog Beispiel 1 wurden 121,87 g (0,467 Mol) eines Talgfettalkoholes (OHZ: 215) in 251,5 g eines paraffinischen Mineralöles mit 45,81 g (0,467 Mol) Maleinsäureanhydrid umgesetzt.
Die Sulfitierung mit einer 25%igen Sulfit-Lösung (44,3 g Natriumdisulfit, 0,233 Mol, 100 % d. Th., in 132,9 g Wasser) erfolgte wie in Beispiel 1.
Durch die Zugabe von Monoethanolamin und Wasser wird das Produkt auf einen pH-Wert von 7,0 - 7,5 und auf einen Wassergehalt von ca. 50 % eingestellt.

### Beispiel 6

Analog Beispiel 1 wurden 96,72 g (0,412 Mol) eines ethoxylierten Talgfettalkohols mit durchschnittlich 3 Mol Ethylenoxid in 279 g eines paraffinischen Mineralöles mit 40,41 g (0,412 Mol) Maleinsäureanhydrid umgesetzt.
Die Sulfitierung analog Beispiel 1 wurde mit einer 25%igen Sulfit-Lösung (39,16 g Natriumdisulfit, 0,206 Mol, 100 % d. Th., in 117,5 g Wasser) durchgeführt.
Durch die Zugabe von Monoethanolamin und Wasser wird das Produkt auf einen pH-wert von 7,0 - 7,5 und auf einen Kassergehalt von ca. 50 % eingestellt.

### Beispiel 7

Analog Beispiel 1 wurden 142,42 g (0,33 Mol) des dort verwendeten Fettalkoholgemisches, jedoch mit durchschnittlich 3 Mol Ethylenoxid umgesetzt (OHZ: 130), in 262 g paraffinischem Mineralöl mit 32,37 g (0,33 Mol) Maleinsäureanhydrid zur Reaktion gebracht.
Die Sulfitierung wie in Beispiel 1 erfolgte mit einer 25%igen Sulfit-Lösung (31,37 g Natriumdisulfit, 0,165 Mol, 100 % d. Th., in 94,1 g Wasser).
Durch die Zugabe von Monoethanolamin und Wasser wird das Produkt auf einen pH-Wert von 7,0 - 7,5 und einen Wassergehalt von ca. 50 % eingestellt.

### Beispiel 8

In einer Apparatur wie in Beispiel 1 wurden 343,13 g (0,14 Mol) eines α, ω-hydroxyorganofunktionellen Polydimethylsiloxans (ca. 30 Dimethylsiloxan-Einheiten, OHZ: ca. 45) mit 27,47 g (0,28 Mol) Maleinsäureanhydrid analog Beispiel 1 umgesetzt.
Als Coemulgator wurden 100 g des Reaktionsproduktes gemäß DP-Anmeldung 36 36 497 (s. Beispiel 4), neutralisiert und Natronlauge, in Form einer 25%igen wäßrigen Emulsion zugegeben.
Die Sulfitierung wie in Beispiel 1 erfolgte mit einer 25%igen Sulfit-Lösung (26,62 g Natriumdisulfit, 0,14 Mol, 100 % d. Th., in 79,9 g Wasser).
Durch die Zugabe von Natronlauge und Wasser wird das Produkt auf einen pH-Wert von 8,0 - 8,5 und einen Wassergehalt von etwa 45 % eingestellt.

### Anwendungsbeispiel 1

Die Produkte aus Beispiel 1 - 3 wurden wie folgt auf Rindspalt getestet:
- Material:: Vollchromgegerbter Rindspalt
- Falzstärke:: 1,3 - 1,4 mm

%-Angaben bezogen auf Falzgewicht

| | | | | |
|---|---|---|---|---|
| **NEUTRALISATION:** | 300 % | Wasser 35° C | | |
| Flotte ab | | | | |
| | 150 % | Wasser 35° C | | |
| | 1 % | Natriumformiat | ungel. | 10 Min. |
| | 1 % | Natriumbicarbonat pH: ca. 6 | 1:10 | 60 Min. |
| Flotte ab | | | | |
| **WASCHEN:** | 300 % | Wasser 55° C | | 10 Min. |
| Flotte ab | | | | |
| | | | | |
| **HYDROPHOBIERUNG:** | 150 % | Wasser 55° C | | |
| | 7,5 % | w.S. an erfindungsgemäßem Produkt | 1:4/60° C | 60 Min. |
| | 1 % | Ameisensäure pH: ca. 4,2 | 1:5 | 20 Min. |
| | | | | |
| **spülen:** | | Wasser 25° C | | 10 Min. |

über Nacht auf Bock,
hängend trocknen,
anfeuchten,
stollen.

Prüfung im Bally-Penetrometer:

| Beispiel | 1 | 2 | 3 | 4 | 5 | 6 | 7 | 8 |
|---|---|---|---|---|---|---|---|---|
| Wasserdurchtritt bei 10 % Stauchung in Min. | >420 | 185 | 125 | >420 | 62 | 50 | 103 | >420 |
| Wasseraufnahme | 17 % nach 7 h | 28 % nach 4 h | 25 % nach 3 h | 11 % nach 7 h | 26 % nach 1 h | 36 % nach 2 h | 32 % nach 2 h | 11 % nach 7 h |

### Anwendungsbeispiel 2

### Hydrophobierte Handschuhnappa - Naturell

Material: Chromgegerbte Haarschafe, abgewelkt.

%-Angaben bezogen auf Abwelkgewicht

| | | | | |
|---|---|---|---|---|
| **WASCHEN:** | 300 % | Wasser 35° C | | 15 Min. |
| Flotte ablassen | | | | |
| | | | | |
| **NEUTRALISATION:** | 100 % | Wasser 35° C | | |
| | 1 % | Natriumbicarbonat pH: 6 | 1:10 | 30 Min. |
| Flotte ablassen | | | | |
| | | | | |
| **WASCHEN:** | 300 % | Wasser 60° C | | 10 Min. |
| Flotte ablassen | | | | |
| | | | | |
| **HYDROPHOBIERUNG:** | 100 % | Wasser 60° C | | |
| | 20 % | Produkt gemäß Beispiel 1 | 1:4/60° C | 60 Min. |
| | + 1,0 % | Ameisensäure | 1:10 | |
| | | | | 2 x à 15 Min. + 20 Min. |
| | | pH: ca. 3,5 | | |
| | | | | |
| **spülen:** | | Wasser 25° C | | 10 Min. |

Leder über Nacht auf Bock,
vakuumtrocknen bei 60° C/3 Min.,
hängend austrocknen,
anfeuchten,
stollen,
millen.

### Anwendungsbeispiel 3

- Material:: gefärbte Lammpelz-Velours
- Flottenverhältnis 1 :: 10 bezogen auf Trockengewicht

Im Anschluß an die Färbung des Pelzleders:

| | | | | |
|---|---|---|---|---|
| spülen: | | Wasser 45° C | | 10 Min. |
| | | | | |
| **HYDROPHOBIERUNG:** | | Wasser 45° C | | |
| | 0,3 g/l | Ammoniak | 1 : 5 | 5 Min. |
| | + 8 - 10 g/l | Produkt gemäß | | |
| | | Beispiel 1 | 1 : 4 / 60° C | 90 Min. |
| | + 0,7 ml/l | Ameisensäure Flotten-pH: ca. 4 | 1 : 5 | 30 Min. |
| | | | | |
| **spülen:** | | Wasser 25° C | | |
| | 0,2 ml/l | Ameisensäure | 1 : 5 | 10 Min. |

Felle über Nacht auf Bock,
zentrifugieren,
naß spannen,
anfeuchten,
stollen,
rauhen,
scheren,
bügeln.

Man erhält weiche wattige Pelzvelours mit einem ausgeprägten Abperleffekt.

## Patentansprüche

1. Verfahren zur Hydrophobierung von Materialien faseriger Struktur, insbesondere Leder und Pelz, unter Verwendung von Sulfobernsteinsäuremonoestern, dadurch gekennzeichnet, daß man Leder und Pelze in wäßriger Flotte mit Sulfobernsteinsäuremonoester enthaltenden Hydrophobiermitteln behandelt, ohne eine Mineralsalzfixierung durchzuführen.

2. Verfahren nach Anspruch 1, dadurch gekennzeichnet, daß Hydrophobiermittel verwendet werden, die als Sulfobernsteinsäuremonoester Organosilikondi-(monosulfosuccinate) enthalten oder daraus bestehen.

3. Verfahren nach Anspruch 1 und 2, dadurch gekennzeichnet, daß die Succinate mit Neutralölen wie Mineralöl, Paraffin, Chlorparaffin, Silikonöl, tierisches und/oder pflanzliches Fett und Öl bzw. deren Kombinationen verwendet werden.

4. Verfahren nach Anspruch 1 - 3, dadurch gekennzeichnet, daß der Einsatz in der Hauptfettung allein oder mehrstufig in Vor-, Haupt- und Top-Fettung erfolgt.

5. Verfahren nach Ansprüchen 1 - 4, dadurch gekennzeichnet, daß die verwendeten Sulfobernsteinsäureester durch Umsetzung von Maleinsäureanhydrid mit alkoholischen Komponenten und anschließende Sulfitierung hergestellt werden.

6. Verfahren nach Anspruch 5, dadurch gekennzeichnet, daß als alkoholische Komponenten ein- oder mehrwertige Alkohole mit einem oder mehreren Alkylresten der Kettenlänge C₁₂₋₄₀, vorzugsweise C₁₆₋₂₈ und/oder Wollwachsalkohole eingesetzt werden.

7. Verfahren nach Ansprüchen 5 oder 6, dadurch gekennzeichnet, daß Maleinsäureanhydrid mit ein bis zwei Äquivalenten alkoholischer Komponente umgesetzt werden.

8. Verfahren nach Ansprüchen 5 - 7, dadurch gekennzeichnet, daß als alkoholische Komponente alkoxilierte Fettalkohole mit EO- und/oder PO -Anteilen von 1 - 10 Mol, vorzugsweise 2 - 5 Mol, pro Mol Fettalkohol eingesetzt werden.

9. Verfahren nach Ansprüchen 6 - 8, dadurch gekennzeichnet, daß vor bzw. während der Sulfitierung des Maleinsäureesters Coemulgatoren verwendet werden.

10. Verfahren nach Ansprüchen 5 - 9, dadurch gekennzeichnet, daß die Umsetzung des Maleinsäureesters mit 0,5 - 1,5 Äquivalenten eines Sulfits oder Bisulfits erfolgt.

11. Verfahren nach Ansprüchen 1 - 10, dadurch gekennzeichnet, daß die Sulfosuccinate in Form ihrer Alkali-, Erdalkali-, Ammonium- oder Alkanolaminsalze verwendet werden.

12. Neue Sulfobernsteinsäuremonoester, erhältlich durch Umsetzung von α,ω-organofunktionellen Polysiloxanen der Formel 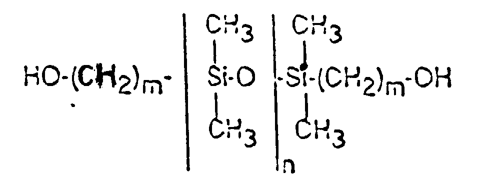 worin n eine Zahl von 10 bis 30 beträgt und m für 1 - 4 steht, mit Maleinsäureanhydrid und nachfolgender Sulfitierung.

## Claims

1. A process for waterproofing materials having a fibrous structure, in particular leather and fur, by using sulfosuccinic acid monoesters, characterized in that leathers and furs are treated in aqueous float with water repellents comprising sulfosuccinic acid monoesters, without conducting a mineral salt fixation.

2. The process according to claim 1 characterized in that water repel!ents are used which comprise as sulfosuccinic acid monoesters organosilicone di-(monosulfosuccinates) or which consist thereof.

3. The process according to claim 1 and 2 characterized in that the succinates are used with neutral oils, such as mineral oil, paraffin, chlorinated paraffin, silicone oil, animal and/or vegetable fat and oil, or with their combinations.

4. The process according to claim 1 - 3 characterized in that the use is effected in the main fatliquoring alone, or in a multistage manner in pre-, main, and top-fatliquoring.

5. The process according to claims 1 - 4 characterized in that the sulfosuccinic acid esters used are produced by reaction of maleic anhydride with alcoholic components and subsequent sulfitation.

6. The process according to claim 5 characterized in that monohydric or polyhydric alcohols having one or more alkyl residues of the chain length C₁₂₋₄₀, preferably C₁₆₋₂₈, and/or wool wax alcohols are used as alcoholic components.

7. The process according to claims 5 or 6 characterized in that maleic anhydride is reacted with one or two equivalents of alcoholic component.

8. The process according to claims 5 - 7 characterized in that alkoxylated fatty alcohols having EO and/or PO-portions of 1 - 10 moles, preferably 2 - 5 moles, per mol of fatty alcohol are used as alcoholic component.

9. The process according to claims 6 - 8 characterized in that co-emulsifiers are used prior to or during sulfitation of the maleic acid ester.

10. The process according to claims 5 - 9 characterized in that the reaction of the maleic acid ester is effected with 0.5 - 1.5 equivalents of a sulfite or bisulfite.

11. The process according to claims 1 - 10 characterized in that the sulfosuccinates are used in the form of their alkali, alkaline-earth, ammonium, or alkanolamine salts.

12. Novel sulfosuccinic acid monoesters obtainable by reaction of α,ω-organofunctional polysiloxanes of the formula 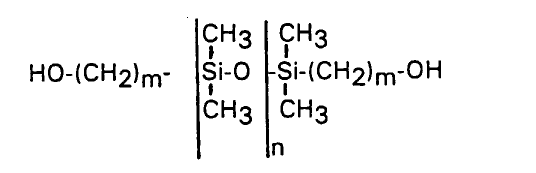 wherein n is a number from 10 to 30 and m represents 1 - 4, with maleic anhydride and subsequent sulfitation.

## Revendications

1. Procédé pour rendre hydrophobe des matériaux à structure fibreuse, plus particulièrement le cuir et les fourrures, en recourant à l'emploi de monoesters de l'acide sulfosuccinique, caractérisé en ce que l'on traite le cuir et les fourrures en bain aqueux par des agents d'hydrophobisation contenant des monoesters de l'acide sulfosuccinique, sans entreprendre une fixation par des sels minéraux.

2. Procédé suivant la revendication 1, caractérisé en ce que l'on utilise des agents d'hydrophobisation qui, à titre de monoesters de l'acide sulfosuccinique, contiennent des di-(monosulfosuccinates) d'organosilicone, ou qui se composent de (monosulfosuccinates) d'organosilicones.

3. Procédé suivant l'une quelconque des revendications 1 et 2, caractérisé en ce que l'on utilise les succinates avec des huiles neutres, comme une huile minérale, la paraffine, la chloroparaffine, l'huile de silicone, une huile et une graisse animales et/ou végétales, et leurs combinaisons.

4. Procédé suivant l'une quelconque des revendications 1 à 3, caractérisé en ce qu'on le met en oeuvre au cours de la nourriture principale seule, ou de manière échelonnée au cours de la prénourriture, de la nourriture principale et de la nourriture finale.

5. Procédé suivant l'une quelconque des revendications 1 à 4, caractérisé en ce que l'on prépare les esters de l'acide sulfosuccinique employés par la réaction de l'anhydride de l'acide maléique avec des composants alcooliques et sulfitation subséquente.

6. Procédé suivant la revendication 5, caractérisé en ce que l'on utilise, à titre de composants alcooliques, des alcools monohydroxylés ou polyhydroxylés avec un ou plusieurs restes alkyle d'une longueur de chaîne de C₁₂ à C₄₀, de préférence de C₁₆ à C₂₈ et/ou des alcools de lanoline.

7. Procédé suivant l'une quelconque des revendications 5 et 6, caractérisé en ce que l'on fait réagir l'anhydride de l'acide maléique avec un à deux équivalents du composant alcoolique.

8. Procédé suivant l'une quelconque des revendications 5 à 7, caractérisé en ce que, à titre de composant alcoolique, on utilise des alcools gras alcoxylés avec des fractions OE et/ou OP de 1 à 10 moles, de préférence de 2 à 5 moles, par mole d'alcool gras.

9. Procédé suivant l'une quelconque des revendications 6 à 8, caractérisé en ce que l'on utilise des co-émulsifs avant ou pendant la sulfitation de l'ester de l'acide maléique.

10. Procédé suivant l'une quelconque des revendications 5 à 9, caractérisé en ce que la réaction de l'ester de l'acide maléique s'effectue avec 0,5 à 1,5 équivalent d'un sulfite ou bisulfite.

11. Procédé suivant l'une quelconque des revendications 1 à 10, caractérisé en ce que l'on utilise les sulfosuccinates sous la forme de leurs sels de métaux alcalins, de métaux alcalino-terreux, d'ammonium et d'alcanolamine.

12. Nouveaux monoesters de l'acide sulfosuccinique, que l'on peut obtenir par la réaction de polysiloxanes α,ω-organofonctionnels de la formule 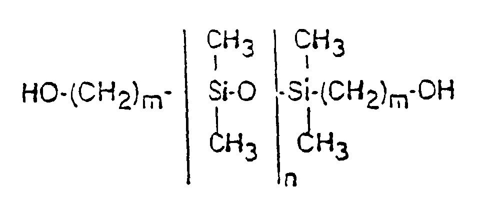 dans laquelle n a une valeur qui varie de 10 à 30 et m varie de 1 à 4, avec l'anhydride de l'acide maléique et sulfitation subséquente.
